# EUROPEAN PATENT APPLICATION

(11) **EP 3 811 811 A1**
(43) Date of publication of application: **28.04.2021**
(21) Application number: 20169665.5
(22) Date of filing: 15.04.2020
(51) Int. Cl.: A45C 5/14, B60B 33/00

(54) **DETACHABLE BOX WHEEL STRUCTURE**

(30) Priority: 24.10.2019 CN 201911016516
(71) Applicant: Hangzhou Gema Suitcases & Bags Co., Ltd., Zhejiang Province 310018 (CN)
(72) Inventor: WU, Lianglin, Hangzhou City, Zhejiang (CN)
(74) Representative: Keil & Schaafhausen Patentanwälte PartGmbB

(57) **Abstract**

The present invention discloses a detachable box wheel structure, relating to the field of bags, mainly comprising a wheel body (3), a wheel axle (2) and a wheel carrier (1), characterized in that an internal wheel carrier (210) is arranged at one end of the wheel axle (2), and the wheel axle (2) is movably connected with the wheel carrier (1) through the internal wheel carrier (210). The internal wheel carrier (210) solves the technological problem of the wheel axle (2) caused by a material, has higher accuracy, can cooperate with the wheel carrier (1) gaplessly, achieving the purpose of effective fitting. The internal wheel carrier (210) is fixedly arranged on the wheel axle (2) and is integrated with same, the wheel axle (2) is cooperatively and movably connected with the wheel carrier (1) through the internal wheel carrier (210); and therefore, the problem that the movable connecting portions of the wheel axle (2) and the wheel carrier (1) are not fitted with each other is solved.

## Description

### Technical Field

The present invention relates to the field of bags, and particularly to a detachable box wheel structure.

### Background

In the current bag industry, in order to solve the problem of inconvenient replacement of a worn box wheel of a draw-bar box, people have improved the structure of the box wheel and designed a detachable box wheel, that is, a box wheel of which the wheel axle and the wheel carrier can be detachable, thereby achieving the purpose of replacing the wheel set below the wheel carrier.

For each existing detachable box wheel, the wheel axle is directly installed in the wheel carrier, and then the wheel axle and the wheel carrier are limited and fixed by the horizontal cooperation between a hardware clamping sheet on the wheel carrier and the wheel axle, as recorded in literature with the Chinese Patent Publication No. of CN207285487U; in this installation mode, it is convenient to control the disassembling and assembling of the wheel set by only operating the hardware clamping sheet, however, in fact, with the current technology, a series of problems such as thermal expansion and cold contraction, etc. of the wheel axle made of metal material cannot be solved, so that the wheel axle cannot be perfectly cooperate with the wheel carrier, that is to say, the existing wheel axle is installed in the wheel carrier but cannot be perfectly fitted with the wheel carrier, there is always a gap between the top of the wheel axle and the inner wall of the cover plate of the wheel carrier.

Because of the gap between the wheel axle and the wheel carrier, there is a room for the wheel axle to upward move in the wheel carrier. It should be known that the wheel axle and wheel carrier are limited by the cooperation between the horizontally arranged hardware clamping sheet and the wheel axle. When the draw-bar box comes into contact with the ground in the state where the box wheels are vertically downward, and when the box wheels come into contact with the ground, the wheel axle may be stressed to generate potential energy for upward movement, and the horizontally arranged hardware clamping sheet needs to withstand the potential energy. Therefore, when the box wheels come into contact with the ground a certain number of times or the impact force generated by the potential energy is large, the hardware clamping sheet on the wheel carrier may be deformed and damaged because of being not capable of withstanding the potential energy.

### Summary

To solve the above technical problem, an object of the present invention is to provide a detachable box wheel structure of which the wheel axle is installed in the wheel carrier and then fitted with same without generating a gap.

To achieve the above object, the present invention adopts the following technical solution: a detachable box wheel structure, mainly comprising a wheel body, a wheel axle and a wheel carrier, characterized in that an internal wheel carrier is arranged at one end of the wheel axle, and the wheel axle is movably connected with the wheel carrier through the internal wheel carrier.

By adopting the above technical solution, the internal wheel carrier solves the technological problem of the wheel axle caused by a material, has higher accuracy, and can cooperate with the wheel carrier gaplessly, achieving the purpose of effective fitting; the internal wheel carrier is fixedly arranged on the wheel axle and is integrated with same, the wheel axle is cooperatively and movably connected with the wheel carrier through the internal wheel carrier, and therefore the problem that the movable connecting portions of the wheel axle and the wheel carrier are not fitted with each other is solved.

Preferably, the wheel carrier is provided with a first through hole, and the internal wheel carrier is cooperatively connected with the first through hole.

By adopting the above technical solution, the internal wheel carrier is inserted in the first through hole and then is cooperatively connected with same, having higher structure stability under the wrapping by the first through hole.

Preferably, a fixing structure is arranged in the first through hole.

By adopting the above technical solution, the fixing structure can fix the internal wheel carrier in the horizontal direction, to prevent same from rotating in the first through hole in the horizontal direction.

Preferably, the wheel carrier is provided with a cover plate.

By adopting the above technical solution, in the case where the internal wheel carrier cooperates with the wheel carrier, the cover plate is a blocking component arranged at the top of the wheel carrier, and the internal wheel carrier is fitted with the cover plate so there is no room for upward movement.

Preferably, the cover plate is integrated with the wheel carrier.

By adopting the above technical solution, since the cover plate is integrated with the wheel carrier, the structure stability of the cover plate is improved.

Preferably, a limiting mechanism is arranged on the wheel carrier.

By adopting the above technical solution, the limiting mechanism can limit and fix the internal wheel carrier.

Preferably, the limiting mechanism is a limiting bayonet pin.

By adopting the above technical solution, because the internal wheel carrier is different from the wheel axle, which cooperates with the wheel carrier without needing horizontal rotation, and then cooperates with a hardware clamping sheet without needing a ring-shaped clamping slot, it is only required that the internal wheel carrier is provided with a limiting hole, to cooperatively limit through the limiting bayonet pin which has a larger thickness and has higher structure stability as compared with the hardware clamping sheet.

Preferably, the limiting bayonet pin is provided with a torsion spring.

By adopting the above technical solution, the limiting bayonet pin can be automatically reset under the action of the torsion spring.

Preferably, the limiting mechanism is of a threaded structure.

By adopting the above technical solution, the internal wheel carrier is tightly screwed with the wheel carrier through threads, having good connection stability.

Compared with the prior art, the present invention has the advantages that: (1) the problem that the movable connecting portions of the wheel axle and the wheel carrier are not fitted with each other is solved; and (2) the cover plate is integrated with the wheel carrier, having structure stability.

### Description of Drawings

Fig. 1 is a structural schematic diagram of the present invention;
Fig. 2 is a structural schematic diagram of a wheel axle portion of the present invention;
Fig. 3 is a structural schematic diagram of the bottom of a wheel carrier of the present invention;
Fig. 4 is a structural schematic diagram of a limiting bayonet pin of the present invention;
Fig. 5 is a schematic diagram of the present invention in an explosion state; and
Fig. 6 is a schematic diagram of an internal wheel carrier in embodiment 2 of the present invention.

In the figures, 1. wheel carrier; 110. first through hole; 120. cover plate; 121. convex structure; 130. second through hole; 140. positioning column; 2. wheel axle; 210. internal wheel carrier; 211. concave structure; 212. limiting hole; 3. wheel body; 4.limiting bayonet pin; 410. switch; 420. bayonet pin structure; 430. torsion spring; 5. bolt.

### Detailed Description

The present invention is further described below in detail in combination with the drawings and embodiments.

### Embodiment 1

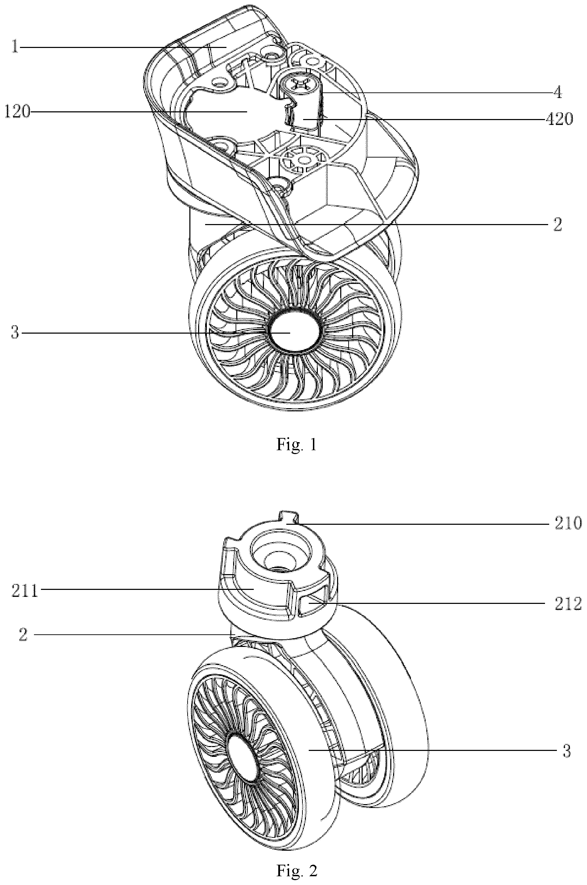

A detachable box wheel structure, mainly comprising a wheel carrier 1, a wheel axle 2 and a wheel body 3, wherein one end of the wheel axle 2 is detachably connected with the wheel carrier 1, as shown in Fig. 1.

In the present embodiment, an internal wheel carrier 210 is arranged at one end of the wheel axle 2 used to connect with the wheel carrier 1, as shown in Fig. 2; the internal wheel carrier 210 is integrally injection-molded and is sleeved at one end of the wheel axle 2, and the wheel axle 2 is rotatable in the horizontal direction with respect to the internal wheel carrier 210; and the wheel axle 2 is cooperatively connected with the wheel carrier 1 through the internal wheel carrier 210.

In the present embodiment, the wheel carrier 1 is provided with a first through hole 110, and the internal wheel carrier 210 can be cooperatively inserted in the first through hole 110; a cover plate 120 is arranged on the upper surface of the wheel carrier 1, and the cover plate 120 corresponds to the first through hole 110 and shields the top thereof, as shown in Fig. 1. Therefor, the first through hole 110 forms a groove with an opening at one side only under the shielding of the cover plate 120, and the internal wheel carrier 210 is cooperatively inserted through the side opening to achieve a connection. It should be noted that the groove formed by the first through hole 110 and the cover plate 120 can be perfectly fitted with the internal wheel carrier 210 inserted therein; and the cover plate 120 is integrated with the wheel carrier 1.

The above solution has the advantageous effects that: (1) the internal wheel carrier 210 is integrally injection-molded, and has high molding precision, so the internal wheel carrier 210 can be perfectly fitted with the inner wall of the first through hole 110 and the inner wall of the cover plate 120 at the top thereof after being cooperatively inserted in the first through hole 110, and thus a gap is prevented from being generated between the connecting portions, thereby solving the problem of damage to the hardware clamping sheet caused by the movement of the wheel axle 2 in the wheel carrier 1 when the wheel axle 2 is detachably connected with the wheel carrier 1 directly; (2) since the cover plate 120 is integrated with the wheel carrier 1, the structure stability of the cover plate 120 is improved; (3) the wheel axle 2 is an elongated cylinder, the wheel axle 2 is detachably connected with the wheel carrier 1 directly, the hardware clamping sheet, as a limiting component used to cooperatively limit together with the wheel axle 2, is the most applicable, however, because the hardware clamping sheet is thin and has limited structure strength, the internal wheel carrier 210 has a larger volume and higher plasticity as compared with the wheel axle 2 and then is applicable to more limiting mechanisms, and the wheel axle 2 is detachably connected with the wheel carrier 1 through the internal wheel carrier 210, a limiting mechanism with higher structure strength can be selected for achieving limiting.

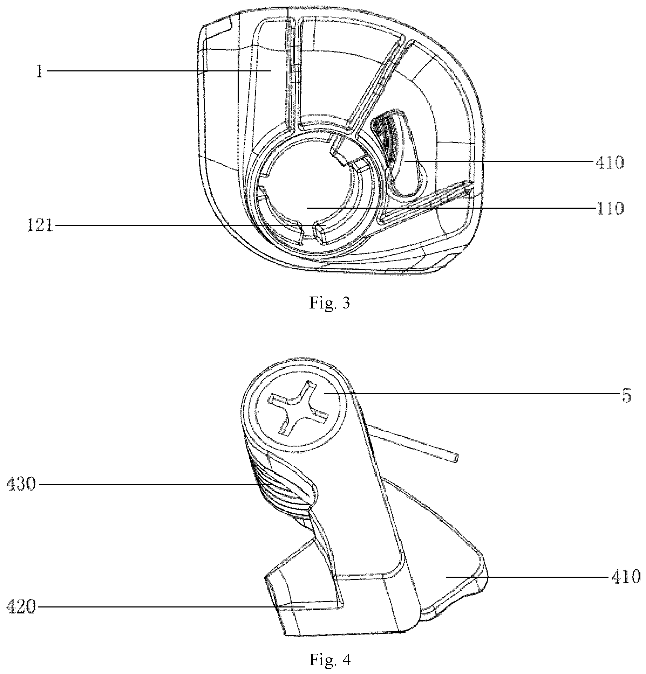

In the present embodiment, a fixing structure is arranged in the first through hole 110, wherein the fixing structure specifically includes a convex structure 121 arranged in the first through hole 110, the convex structure 121 is annularly arranged in the first through hole 110, and the convex structure 121 is provided with three recesses such that the whole is disconnected, as shown in Fig. 3; a concave structure 211 is arranged on the internal wheel carrier 210, and the concave structure 211 is provided with three bulges, as shown in Fig. 2; the concave structure 211 on the internal wheel carrier 210 correspondingly cooperates with the convex structure 121 in the first through hole 110, so that after the internal wheel carrier 210 is cooperatively inserted in the first through hole 110, the bulges on the concave structure 211 and the recesses on the convex structure 121 are cooperatively butted, thereby playing a role of preventing the internal wheel carrier 210 from rotating in the first through hole 110 in the horizontal direction.

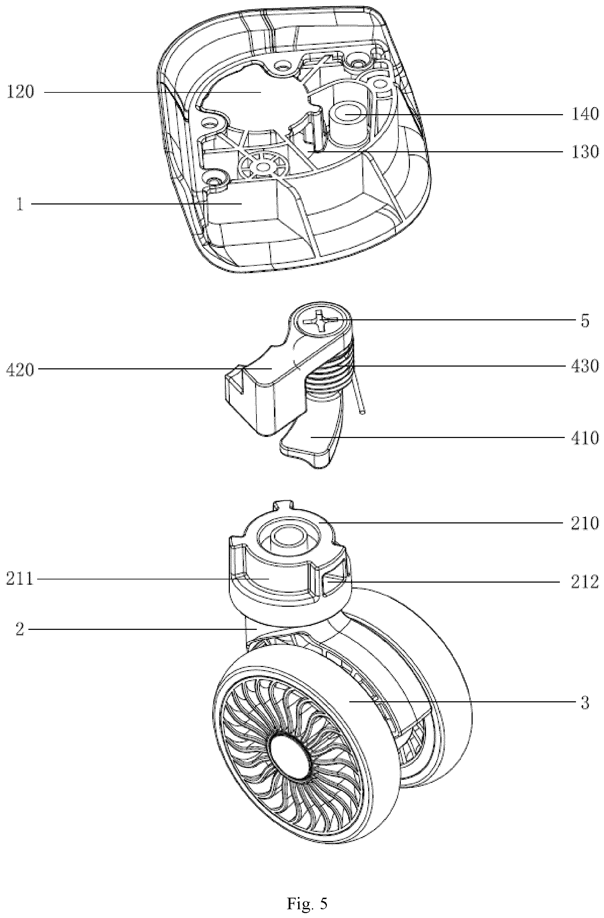

In the present embodiment, the upper surface of the wheel carrier 1 is provided with a positioning column 140, and the wheel carrier 1 is provided with a limiting mechanism through the positioning column 140, that is, a limiting bayonet pin 4; the limiting bayonet pin 4 is composed of a bayonet pin structure 420, a switch 410, and a torsion spring 430, a pin head protruding to the side surface is arranged at one end of the bayonet pin structure 420, a bolt 5 is arranged at the other end opposite thereto in the vertical direction, and the bayonet pin structure 420 is connected with the switch 410 through the bolt 5, as shown in Fig. 4. In the present embodiment, the bayonet pin structure 420 is arranged on the upper surface of the wheel carrier 1, and the bolt 5 at one end thereof penetrates through the positioning column 140 and then is hinged therewith, as shown in Fig. 1. The switch 410 is arranged on the lower surface of the wheel carrier 1, and is connected with the bayonet pin structure 420 through the bolt 5, as shown in Fig. 3. The torsion spring 430 is sleeved outside the positioning column 140, and cooperates with the bayonet pin structure 420, that is, the rotating arm at the end of the torsion spring 430 is butted against the one side opposite to the pin head of the bayonet pin structure 420, to generate a tensioning force for the bayonet pin structure 420 to rotate to one side of the pin head. The upper surface of the wheel carrier 1 is provided with a second through hole 130 at the side with the first through hole 110, as shown in Fig. 5; and the pin head of the bayonet pin structure 420 corresponds to the second through hole 130 and can be inserted therein.

In the present embodiment, one side of the internal wheel carrier 210 is provided with a limiting hole 212, as shown in Fig. 5. The limiting hole 212 corresponds to the second through hole 130 in a state where the internal wheel carrier 210 is inserted in the first through hole 110. The pin head of the bayonet pin structure 420 can be cooperatively inserted in the limiting hole 212 of the internal wheel carrier 210 through the second through hole 130 to cooperatively limit together same.

In the present embodiment, the internal wheel carrier 210 is inserted in the first through hole 110 to achieve a cooperative connection with same, the bayonet pin structure 420 hinged to the positioning column 140 on the wheel carrier 1 may be rotated toward the side where the second through hole 130 is located under the tension of the torsion spring 430, and the pin head of the bayonet pin structure 420 may cooperatively limit together with the limiting hole 212 of the internal wheel carrier 210 through the second through hole 130; if there is a need to disconnect the wheel axle 2 from the wheel carrier 1, by operating the switch 410 on the lower surface of the wheel carrier 1, the bayonet pin structure 420 is rotated in the direction opposite to the second through hole 130 under the driving of the switch, and the pin head is disconnected from the limiting hole 212, so that the wheel axle 2 can be detached; the torsion spring 430 has a resetting effect. After the disconnection operation, if the operator releases the switch 410, the bayonet pin structure 420 is reset under the action of the torsion spring 430, that is, is rotated back to the state for cooperatively limiting together with the limiting hole 212.

In the present embodiment, the wheel axle 2 is inserted in the first through hole 110 through the internal wheel carrier 210 to achieve a detachable connection with the wheel carrier 1, and after being inserted, the internal wheel carrier 210 is perfectly fitted with the inner wall of the first through hole 110 and the inner wall of the cover plate 120 at the top thereof, achieving a gapless connection. Therefore, when the draw-bar box comes into contact with the ground in the state where the box wheels are vertically downward, and when the box wheels come into contact with the ground, the upward acting force generated may not cause the internal wheel carrier 210 to move upwards in the first through hole 110, so that limiting bayonet pin 4 for horizontal limiting together with the internal wheel carrier 210 may not be damaged by the upward acting force, solving the problem that when the wheel axle 2 is detachably connected to the wheel carrier 1 directly, the wheel axle 2 moves in the wheel carrier 1 due to a gap, and therefore the hardware clamping sheet is damaged by the upward acting force. It should be noted that the upward force generated when the box wheels come into contact with the ground may act on the cover plate 120, but because the cover plate 120 is fitted with the internal wheel carrier 210, compared with the impact force of the wheel axle 2 moving upward in the wheel carrier 1, the acting force may be smaller, and the cover plate has a higher structure strength since the cover plate 120 is integrated with the wheel carrier 1. Therefore, by connecting the internal wheel carrier 210 with the wheel carrier 1, the stability is higher.

### Embodiment 2

The present embodiment is different from embodiment 1 in that the outer wall of the internal wheel carrier 210 is provided with threads, as shown in Fig. 6. The first through hole 110 is provided therein with threads matched with that of the internal wheel carrier 210, and the internal wheel carrier 210 is cooperatively connected with the first through hole 110 through the threads, so the wheel axle 2 and the wheel carrier 1 are detachably connected.

Although preferred embodiments of the present invention are described in detail above, it should be understood that for those skilled in the art, various variations and changes can be made to the present invention. Any modification, equivalent replacement, improvement, etc. made within the spirit and the principle of the present invention shall be included within the protection scope of the present invention.

## Claims

1. A detachable box wheel structure, mainly comprising a wheel body (3), a wheel axle (2) and a wheel carrier (1), **characterized in that** an internal wheel carrier (210) is arranged at one end of the wheel axle (2), and the wheel axle (2) is movably connected with the wheel carrier (1) through the internal wheel carrier (210).

2. The detachable box wheel structure according to claim 1, **characterized in that** the wheel carrier (1) is provided with a first through hole (110), and the internal wheel carrier (210) is cooperatively connected with the first through hole (110).

3. The detachable box wheel structure according to claim 2, **characterized in that** a fixing structure is arranged in the first through hole (110).

4. The detachable box wheel structure according to claim 1, **characterized in that** the wheel carrier (1) is provided with a cover plate (120).

5. The detachable box wheel structure according to claim 4, **characterized in that** the cover plate (120) is integrated with the wheel carrier (1).

6. The detachable box wheel structure according to claim 1, **characterized in that** a limiting mechanism is arranged on the wheel carrier (1).

7. The detachable box wheel structure according to claim 6, **characterized in that** the limiting mechanism is a limiting bayonet pin (4).

8. The detachable box wheel structure according to claim 7, **characterized in that** the limiting bayonet pin (4) is provided with a torsion spring (430).

9. The detachable box wheel structure according to claim 6, **characterized in that** the limiting mechanism is of a threaded structure.
